# EUROPEAN PATENT APPLICATION

(11) **EP 2 717 210 A1**
(43) Date of publication of application: **09.04.2014**
(21) Application number: 12792997.4
(22) Date of filing: 02.04.2012
(51) Int. Cl.: G06Q 30/02, G06Q 30/06

(54) **PROGRESS CIRCUMSTANCE PRESENTATION DEVICE, PROGRESS CIRCUMSTANCE PRESENTATION PROGRAM, COMPUTER-READABLE RECORDING MEDIUM WHEREON PROGRESS CIRCUMSTANCE PRESENTATION PROGRAM IS RECORDED, AND PROGRESS CIRCUMSTANCE PRESENTATION METHOD**

(30) Priority: 31.05.2011 JP 2011122918
(71) Applicant: Rakuten, Inc., Tokyo 140-0002 (JP)
(72) Inventor: ITO Kensuke, Tokyo 140-0002 (JP)
(74) Representative: HOFFMANN EITLE
(86) International application number: PCT/JP2012/058960
(87) International publication number: WO 2012/165033

(57) **Abstract**

A progress presentation device (100) comprises an acquisition part (120) acquiring an email transmitted to a buyer from a seller executing a transaction on a product. The progress presentation device (100) further comprises an extraction part (130) extracting identification information identifying the transaction and progress information presenting the progress of the transaction from the acquired email. The progress presentation device (100) further comprises a presentation part (170) arranging and presenting to the buyer the extracted progress information on the basis of the extracted identification information.

## Description

### Technical Field

The present invention relates to a progress presentation device, progress presentation program, computer-readable recording medium on which the progress presentation program is recorded, and progress presentation method.

### Background Art

Some email exchange systems known in the prior art allow a user who wishes to exchange email to exchange email with the sender of a message without letting the sender know his/her own email address (for example, Patent Literature 1).

Such systems associate and store a message ID identifying the message, an email address of the sender, an email address of the user, and a session ID that is unique to the message ID and email address of the sender. Such systems send an email having the session ID attached to the email address of the sender stored in association with the session ID so as to prevent the sender from knowing the email.

### Prior Art Literature

### Patent Literature

Patent Literature 1: Japanese Patent Publication No. 4490001.

### Disclosure of the Invention

### Problem to be Solved by the Invention

Here, a return email to a message (namely, an In-Reply-To email) generally has the same message ID or session ID as the message. However, for example, in the case of an email transmitted following placement of an order for a product, the email is often transmitted from the seller of the product to the buyer; a return (namely, In-Reply-To) email to the email sent to the buyer is rarely sent. For that reason, it is unlikely that multiple emails associated with the transaction have the same message ID or session ID. Therefore, it is difficult to sort out multiple emails including a transaction status of the ordered product based on the message ID or session ID, raising a problem that it is difficult for the seller and buyer to check on the progress of the transaction.

The present invention is invented with the view of the above problem and an exemplary objective of the present invention is to provides a progress presentation device, a progress presentation program, a computer-readable recording medium on which the progress presentation program is recorded, and a progress presentation method that are capable of arranging and presenting the progress of a transaction included in emails on the basis of transaction.

### Means for Solving the Problem

In order to achieve the above objective, the progress presentation device according to a first exemplary aspect of the present invention comprises:
an acquisition means for acquiring an email transmitted to a buyer from a seller executing a transaction on a product:
   an extraction means for extracting identification information identifying the transaction and progress information presenting progress of the transaction from the acquired email; and
   a presentation means for arranging and presenting to the buyer the extracted progress information on the basis of the extracted identification information.

Furthermore, it is possible in the progress presentation device according to a first exemplary aspect that:
the extraction means extracts the identification information and the progress information by cross-checking a body text of the acquired email with given character string cross-check patterns, and
a warning means for warning to the seller when the extraction means is not able to extract either the identification information or the progress information or neither the identification information nor the progress information.

Furthermore, it is possible in the progress presentation device according to a first exemplary aspect that:
the presentation means presents any one or more of the identification information and any progress corresponding to the identification information in a highlighted manner when a transition pattern of the progress information arranged in an order of acquisition date and time of emails, these are extraction sources, or in an order of transmission date and time of the emails on the basis of the extracted identification information does not match given progress transition patterns.

Furthermore, it is possible in the progress presentation device according to a first exemplary aspect that:
the presentation means arranges and presents the extracted progress information in an order of acquisition date and time of emails, these are extraction sources of the progress information or in an order of transmission date and time of the emails on the basis of the extracted identification information.

Furthermore, it is possible in the progress presentation device according to a first exemplary aspect that:
the presentation means presents an interval of the acquisition dates and times or transmission dates and times of the arranged progress information by means of information presenting the interval or as a mutual positional relationship of the progress information.

Furthermore, it is possible in the progress presentation device according to a first exemplary aspect that:
the presentation means identifies the latest progress information in the extracted progress information in an order of acquisition date and time of emails, these are extraction sources of the progress information or in an order of transmission date and time of the emails on the basis of the extracted identification information, and presents to the buyer either the identification information corresponding to the identified progress information or a quantity of the identification information on the basis of the identified progress information.

Furthermore, it is possible in the progress presentation device according to a first exemplary aspect that:
the presentation means presents a given quantity of latest progress information in the extracted progress information in an order of acquisition date and time of emails, these are extraction sources of the progress information or in an order of transmission date and time of the emails on the basis of the extracted identification information.

Furthermore, it is possible in the progress presentation device according to a first exemplary aspect that:
the acquisition means forwards the acquired email to a destination specified in the email.

In order to achieve the above objective, a progress presentation program according to a second exemplary aspect of the present invention allows a computer to function as:
an acquisition means for acquiring an email transmitted to a buyer from a seller executing a transaction on a product:
   an extraction means for extracting identification information identifying the transaction and progress information presenting the progress of the transaction from the acquired email; and
   a presentation means for arranging and presenting to the buyer the extracted progress information on the basis of the extracted identification information.

In order to achieve the above objective, a progress presentation program recorded on a computer-readable recording medium according to a third exemplary aspect of the present invention allows a computer to function as:
an acquisition means for acquiring an email transmitted to a buyer from a seller executing a transaction on a product:
   an extraction means for extracting identification information identifying the transaction and progress information presenting progress of the transaction from the acquired email; and
   a presentation means for arranging and presenting to the buyer the extracted progress information on the basis of the extracted identification information.

In order to achieve the above objective, a progress presentation method according to a fourth exemplary aspect of the present invention is a method executed by a progress presentation device comprising an acquisition means, an extraction means, and a presentation means, including:
an acquisition step in which the acquisition means for acquire an email transmitted to a buyer from a seller executing a transaction on a product:
   an extraction step in which the extraction means extracts identification information identifying the transaction and progress information presenting progress of the transaction from the acquired email; and
   a presentation step in which the presentation means arranges and presents to the buyer the extracted progress information on the basis of the extracted identification information.

### Effects of the Invention

The progress presentation device, progress presentation program, computer-readable recording medium on which the progress presentation program is recorded, and progress presentation method according to the present invention are capable of arranging and presenting the progress of a transaction included in emails on the basis of transaction.

### Brief Description of Drawings

FIG. 1 is a system configuration chart presenting an exemplary configuration of the progress presentation system according to an embodiment of the present invention;
FIG. 2 is a flowchart presenting an example of the email generation procedure executed by a seller terminal device;
FIG. 3A is an illustration presenting an exemplary transaction status input screen displayed by the seller terminal device;
FIG. 3B is an illustration presenting an exemplary email generation screen displayed by the seller terminal device;
FIG. 4 is a hardware configuration chart presenting an exemplary configuration of the progress presentation device according to the embodiment of the present invention;
FIG. 5 is a flowchart presenting an example of an email relay procedure executed by the progress presentation device;
FIG. 6 is a block diagram presenting exemplary functions exerted by the progress presentation device;
FIG. 7 is an illustration presenting an example of a transaction table stored by the progress presentation device;
FIG. 8 is an illustration presenting an example of a status history table stored by the progress presentation device;
FIG. 9 is a flowchart presenting an example of a transaction status presentation procedure executed by the progress presentation device;
FIG. 10 is an illustration presenting an example of a transaction status table stored by the progress presentation device;
FIG. 11A is an illustration presenting an example of a normal progress transition pattern table 1 stored by the progress presentation device;
FIG. 11B is an illustration presenting an example of a normal progress transition pattern table 2 stored by the progress presentation device;
FIG. 12A is an illustration presenting an exemplary email thread display screen on which a transaction status is highlighted;
FIG. 12B is an illustration presenting an exemplary email thread display screen on which a transaction ID is highlighted;
FIG. 12C is an illustration presenting an exemplary email thread display screen on which a transaction status and transaction ID are highlighted;
FIG. 12D is an illustration presenting an exemplary email thread display screen on which only latest transaction statuses are displayed;
FIG. 12E is an illustration presenting an exemplary email thread display screen on which transaction IDs are displayed on the basis of transaction status; and
FIG. 13 is an illustration presenting an exemplary email thread display screen on which the transition intervals of transaction statuses are displayed.

### Mode for Carrying Out the Invention

Embodiments of the present invention will be described hereafter with reference to the attached drawings.

### Embodiment 1

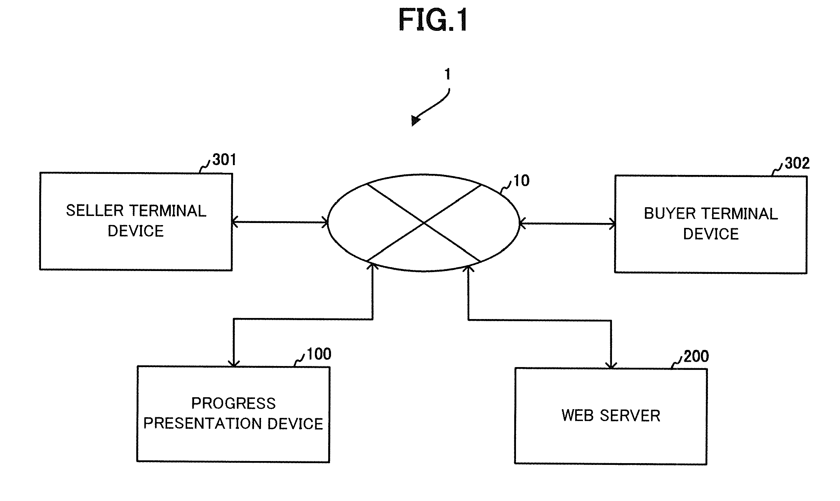

A progress presentation device 100 according to Embodiment 1 of the present invention constitutes a progress presentation system 1 shown in FIG. 1. The progress presentation system 1 is configured with a computer communication network 10 (the communication network 10, hereafter), a progress presentation device 100 of the present invention, a web server 200, a seller terminal device 301, and a buyer terminal device 302.

The communication network 10 consists of, for example, the Internet. The communication network 10 can be a LAN (local area network) or public line network.

Prior to describing the progress presentation device 100, the web server 200, seller terminal device 301, and buyer terminal device 302 will be described hereafter.

The web server 200 is, for example, an HTTP (hyper text transfer protocol) server unit on which web server software such as Apache is installed. The web server 200 publishes on the Internet a web page on which products that are sold at a store run by the seller operating the seller terminal device 301 are posted. The web server 200 further publishes a web page used for placing orders for the products. Then, receiving information presenting an order from a user who has viewed the web page (the order information, hereafter) from the buyer terminal device 302, the web server 200 sends the information to the seller terminal device 301.

The seller terminal device 301 and buyer terminal device 302 consist of a personal computer provided with a display such as an LCD (liquid crystal display) and an input device such as a keyboard and mouse.

Receiving the order information from the web server 200, the seller terminal device 301 displays on the LCD the details of the order presented by the order information. Operated by the seller who has viewed the displayed order details, the seller terminal device 301 generates an email reporting the progress of the transaction of the ordered product (the transaction status, hereafter). Then, the seller terminal device 301 sends the generated email to the buyer, for example, via a progress presentation device 100 designated as the SMTP (simple mail transfer protocol) server.

Receiving the email via the progress presentation device 100, the buyer terminal device 302 displays the received email on the LCD. Operated by the buyer who has viewed the displayed email, the buyer terminal device 302 generates a return email if necessary. Subsequently, the buyer terminal device 302 sends the generated email to the seller, for example, via a progress presentation device 100 designated as the SMTP server.

Subsequently, the seller terminal device 301 or buyer terminal device 302 receives from the progress presentation device 100 a web page displaying the transaction status and emails sorted out on the basis of transaction (namely, in a thread display) or a web page providing thread display of the transactions and emails sorted out on the basis of transaction status, and displays the received page on the LCD.

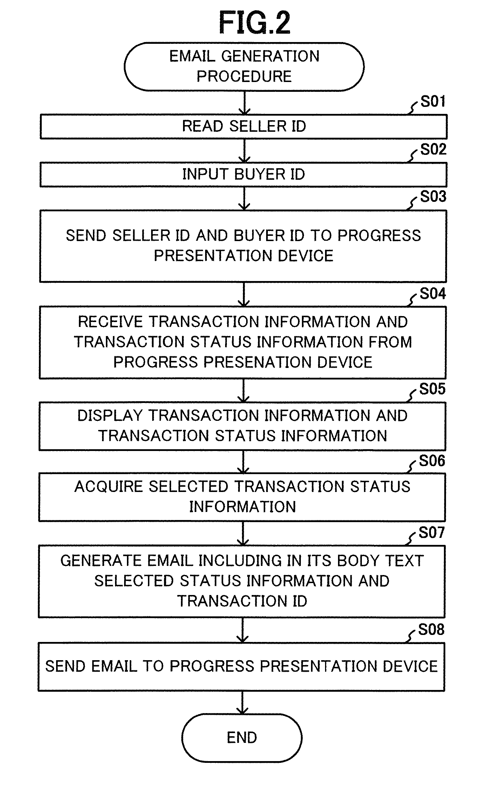

Here, the email generation procedure of FIG. 2 executed by the seller terminal device 301 to generate an email will be described.

With a given operation conducted by the user, the seller terminal device 301 starts executing the email generation procedure. At the start of executing the email generation procedure, the seller terminal device 301 reads the seller ID identifying the seller from a hard disc using the seller terminal device 301 (Step S01). Here, the seller using the seller terminal device 301 is the seller running a store having received a product order.

Then, the seller views information identifying the buyer who placed the order (the buyer ID, hereafter) from the order details displayed on the LCD, and operates the keyboard to make the keyboard input signals presenting the buyer ID. Subsequently, the seller terminal device 301 acquires the buyer ID presented by the input signals (Step S02), and sends the seller ID read in the Step S01 and the buyer ID acquired in the Step S02 to the progress presentation device 100 (Step S03).

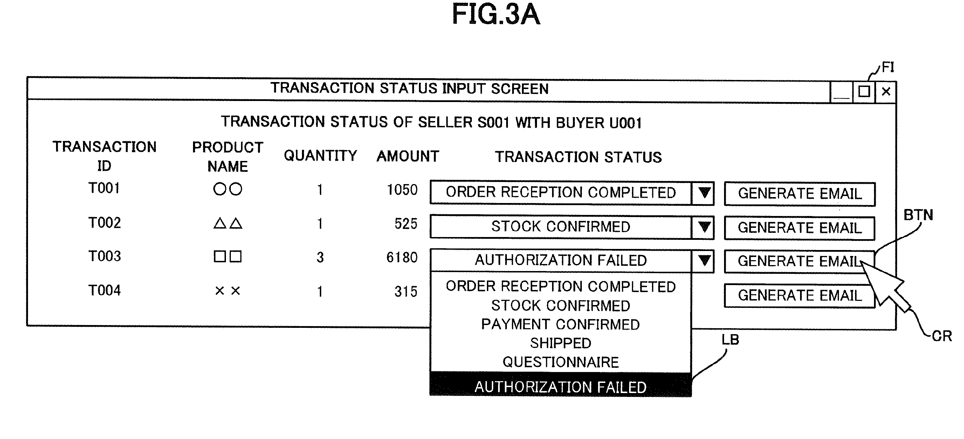

Subsequently, the seller terminal device 301 receives from the progress presentation device 100 transaction information presenting the transaction between the buyer identified by the buyer ID and the seller identified by the seller ID, which are sent in the Step S03, and information presenting the progress of the transaction (the progress information or transaction status information, hereafter) (Step S04). Then, the seller terminal device 301 displays on the LCD a transaction status input screen FI as shown in FIG. 3A, and displays the transaction information and transaction status information received in the Step S04 on the transaction status input screen FI (Step S05).

The transaction information received in the Step S04 is information associating information identifying the transaction (the transaction ID, hereafter), the seller ID of the seller executing the transaction, the buyer ID of the buyer executing the transaction, information presenting an email address of the buyer, information presenting the name of the product to be traded in the transaction (the product name information, hereafter), information identifying the product (the product ID, hereafter), information presenting the quantity of the product to be traded in the transaction (the trading quantity information, hereafter), and information presenting the trading price in the transaction (the trading price information, hereafter).

On the other hand, the transaction status information received in the Step S04 is the latest transaction status information stored by the progress presentation device 100 at the time when the progress presentation device 100 receives the seller ID and buyer ID sent in the Step S03.

Subsequently, the seller determines whether the transaction status presented by the transaction information and transaction status information displayed on the transaction status input screen FI is different from the current status, for example, due to some progress in the transaction. If the displayed transaction status is different from the current status, the seller selects the current transaction status among multiple transaction statuses displayed in a list box LB in FIG. 3A. To do so, the seller operates the keyboard to make the keyboard input signals presenting the selected transaction status (the selected transaction status, hereafter). Subsequently, the seller terminal device 301 acquires information presenting the selected transaction status presented by the input signals (the selected transaction status information, hereafter) (Step S06).

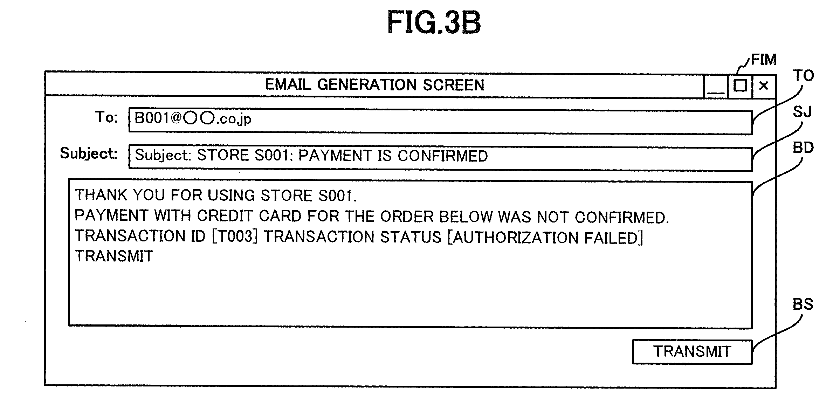

Subsequently, the seller operates the mouse of the seller terminal device 301 to place the cursor CS displayed on the transaction status input screen FI on a button BTN displayed to the right of the list box LB as the seller faces the screen FI and clicks the mouse. Receiving the signals input from the mouse upon this operation, the seller terminal device 301 displays an email generation screen FIM as shown in FIG. 3B.

The email generation screen FIM has an email destination field TO, a subject field SJ, and a body text field BD. The seller terminal device 301 displays the email address of the buyer included in the transaction information received in the Step S04 of FIG. 2 in the destination field TO of the email generation screen FIM. The seller terminal device 301 further displays the selected transaction status information acquired in the Step S06 and the transaction ID of the transaction of which the status is presented by the selected transaction status information between respective predetermined character strings in the body text field BD.

In this embodiment, the transaction ID is displayed between a predetermined character string "transaction ID [" and a predetermined character "]" and the selected transaction status information is displayed between a predetermined character string "transaction status [" and a predetermined character "]" in the body text field BD. However, this is not restrictive. For example, the selected transaction status information and transaction ID can be displayed before or after respective predetermined character strings.

Then, the seller who views the email generation screen FIM operates the keyboard and mouse to make the seller terminal device 301 edit the character string displayed in the subject field SJ and the character string displayed in the body text field BD. Subsequently, the seller terminal device 301 generates an email having the address displayed in the destination field TO as the destination, the edited character string in the subject field SJ as the subject, and the character string in the body text field BD as the body text (Step S07).

Subsequently, the seller operates the mouse to place the cursor on a transmission button BS on the email generation screen FIM and clicks the mouse. Then, the seller terminal device 301 sends the email generated in the Step S07 to the progress presentation device 100, not to the destination of the email (Step S08). This is because the progress presentation device 100 forwards the email to the destination. Subsequently, the seller terminal device 301 ends the execution of the email generation procedure.

Receiving the email forwarded from the progress presentation device 100, the buyer terminal device 302 displays the received email. Furthermore, a return email to the email displayed by the buyer terminal device 302 includes in its body text the transaction ID and transaction status information enclosed by given character strings as generated by the seller terminal device 301 and is sent back to the seller terminal device 301 via the progress presentation device 100.

With the above configuration, the seller terminal device 301 and buyer terminal device 302 automatically generate an email including in its body text the transaction ID and transaction status information enclosed by given character strings in advance. Therefore, the incident of the seller terminal device 301 and buyer terminal device 302 exchanging emails not including in their body text the transaction ID and transaction status information enclosed by given character strings is prevented in a more reliable manner than the prior art.

The progress presentation device 100 will be described hereafter.

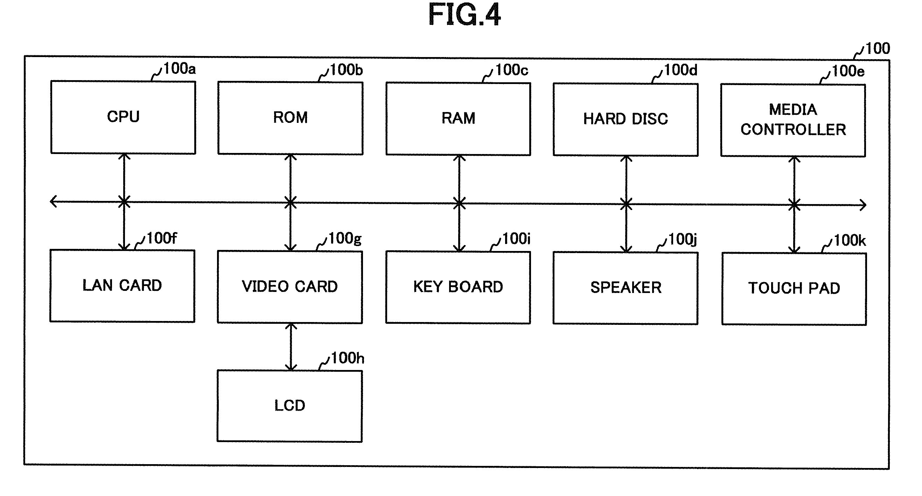

The progress presentation device 100 consists of a server unit as shown in FIG. 4, comprising a CPU (central processing unit) 100a, a ROM (read only memory) 100b, a RAM (random access memory) 100c, a hard drive 100d, a media controller 100e, a LAN card (local area network) 100f, a video card 100g, an LCD (liquid crystal display) 100h, a keyboard 100i, a speaker 100j, and a touch pad 100k.

The CPU 100a executes software procedures according to programs stored in the ROM 100b and hard disc 100d to control the entire progress presentation device 100.

The RAM 100c temporarily stores data to be processed while the CPU 100a executes programs.

The hard disc 100d is an information storage storing tables in which various data are stored. The progress presentation device 100 can comprise a flash memory instead of the hard disc 100d.

The media controller 100e reads various data and programs from recording media including flash memories, CDs (compact discs), DVDs (digital versatile discs), and Blu-Ray discs (registered trademark).

The LAN card 100f transmits to/receives data from/ the web server 200, the seller terminal device 301, and the buyer terminal device 302 connected via the communication network 10. The LAN card 100f constitutes an acquisition part, a warning part, and a presentation part, which will be described later.

The keyboard 100i and touch pad 100k input signals or information in accordance with user operation.

The video card 100g draws (namely, renders) images based on digital signals output from the CPU 100a and outputs image signals presenting the drawn images.

The LCD 100h displays images in accordance with the image signals output from the video card 100g. Here, the progress presentation device 100 can comprise a PDP (plasma display panel) or EL (electroluminescence) display instead of the LCD 100h.

The speaker 100j outputs sound based on signals output from the CPU 100a.

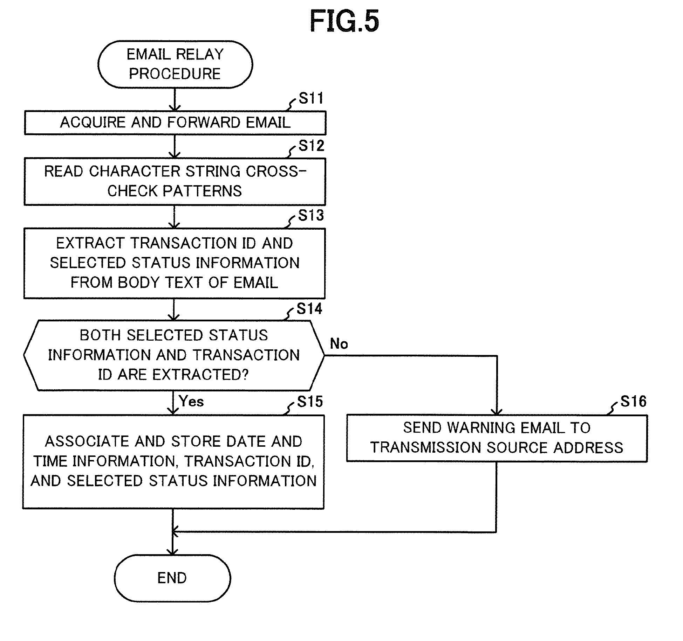

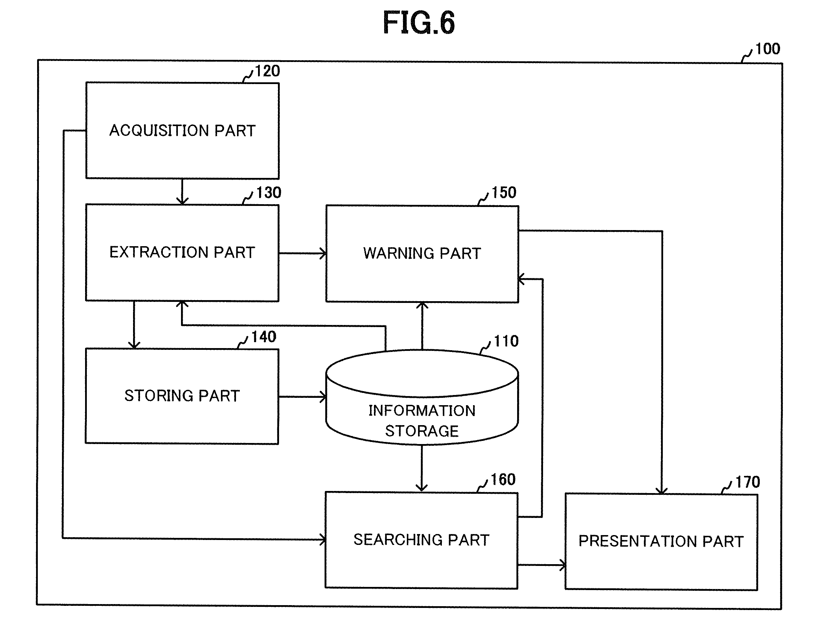

The CPU 100a of the progress presentation device 100 executes the email relay procedure shown in FIG. 5 using the hardware shown in FIG. 4 to function as an extraction part 130 and a storing part 140 shown in FIG. 6. The CPU 100a further functions as an information storage 110 in cooperation with the hard disc 100d. The CPU 100a further functions an acquisition part 120, a warning part 150, and a presentation part 170 in cooperation with the LAN card 100f.

Prior to describing the email relay procedure in FIG. 5, data used in the procedure will be described hereafter.

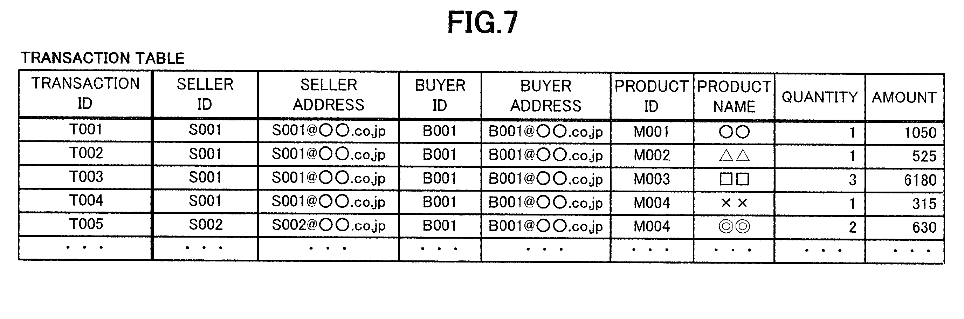

The information storage 110 stores a transaction table as shown in FIG. 7. The transaction table stores the transaction information described in regard to the Step S04 of FIG. 2. More specifically, it is information associating the transaction ID identifying a transaction, the seller ID of the seller executing the transaction, information presenting an email address of the seller, the buyer ID of the buyer executing the transaction, information presenting an email address of the buyer, the product ID of a product to be traded in the transaction, product name information of the product, transaction quantity information presenting the quantity of the product to be traded in the transaction, and trading price information in the transaction.

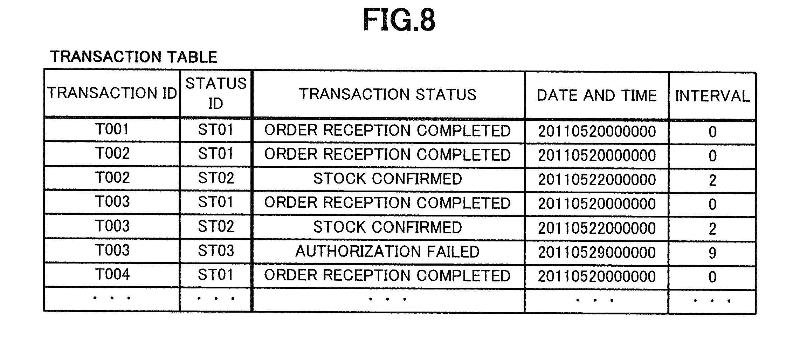

The information storage 110 further stores a status history table presenting the transaction status transition history as shown in FIG. 8. The status history table associates and stores the transaction ID stored in the transaction table in FIG. 7, information identifying the progress of the transaction identified by the transaction ID (the status ID, hereafter), transaction status information of the transaction, information presenting the transmission date and time of an email including in its body text the transaction status presented by the transaction status information (the date and time information, hereafter), and information presenting the time interval between the date and time when the transaction starts (namely, when the order reception is completed) and the transmission date and time (the interval information, hereafter).

The email relay procedure shown in FIG. 5 that is executed using the data stored in the above tables will be described hereafter.

The progress presentation device 100 starts executing the email relay procedure as it receives an email from the seller terminal device 301 or buyer terminal device 302 by means of the LAN card 100f shown in FIG. 4.

At the start of executing the email generation procedure, the acquisition part 120 shown in FIG. 6 acquires an email from the LAN card 100f, copies the acquired email, and forwards the acquired email to the destination of the email (Step S11).

Then, the extraction part 130 shown in FIG. 6 reads given character string cross-check patterns from the information storage 110 (Step S12). The character string cross-check patterns include a pattern presenting the character string enclosing a transaction ID included in the body text of the email and a pattern presenting the character string enclosing transaction status information included in body text of the email. In this embodiment, the character string presented by the character string cross-check pattern for enclosing a transaction ID consists of "transaction ID [" and "]" and the character string presented by the character string cross-check pattern for enclosing transaction status information consists of "transaction status [" and "]."

Subsequently, the extraction part 130 shown in FIG. 6 cross-checks the character string cross-check patterns read in the Step S12 with the body text of the email acquired in the Step S11. Consequently, the transaction ID and selected status information that is the transaction status information, which are enclosed by the given character strings presented by the character string cross-check patterns, are extracted from the body text of the email (Step S 13).

Then, the extraction part 130 determines whether both the transaction ID and selected status information are extracted (Step S14). Here, if both the transaction ID and selected status information are extracted (Step S14; Yes), the extraction part 130 extracts information presenting the transmission date and time of the email from which the extracted transaction ID and selected status information are extracted from the header part of the email, and designates the extracted information as date and time information.

Subsequently, the storing part 140 shown in FIG. 6 associates the extracted transaction ID, transaction status information, and date and time information and stores them in the status history table shown in FIG. 8 (Step S15), and then ends the email relay procedure.

On the other hand, if any one or more of the transaction ID and selected status information are not extracted in the Step S14 (Step S14; No), the extraction part 130 executes the processing of Step S16.

In the Step S16, the extraction part 130 sends an email including a message indicating failure of extracting the information, information having failed to be extracted, and the body text of the extraction-target email (the warning email, hereafter) to the address of the transmission source of the extraction-target email (Step S16), and then ends the email relay procedure.

Other procedures executed by the progress presentation device 100 besides the email relay procedure will be described hereafter.

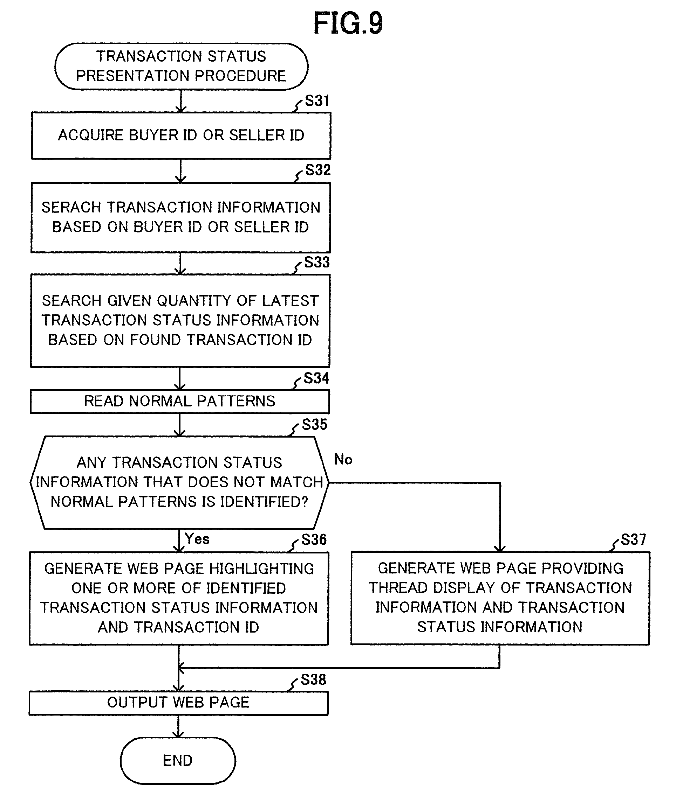

Executing the transaction status presentation procedure shown in FIG. 9, the CPU 100a of the progress presentation device 100 further functions as a searching part 160 shown in FIG. 6.

Prior to describing the transaction status presentation procedure shown in FIG. 9, data used in the procedure will be described hereafter.

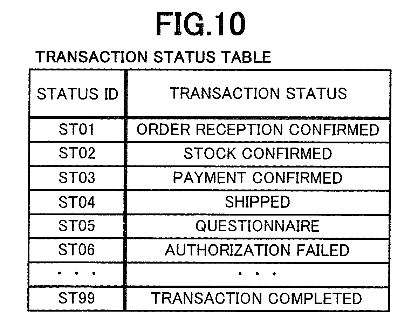

The information storage 110 shown in FIG. 6 further stores a transaction status table shown in FIG. 10. The transaction status table is a master table storing multiple status IDs and transaction status information for possible statuses of a transaction between the seller and buyer.

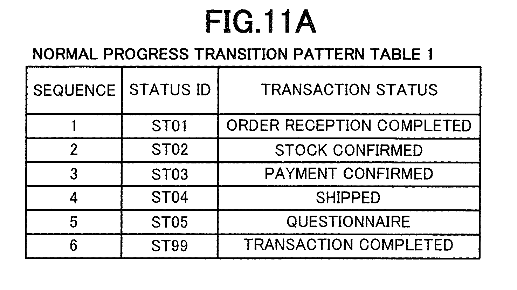

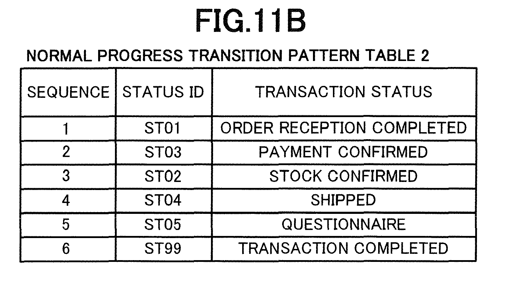

The information storage 110 further stores a normal progress transition pattern table 1 shown in FIG. 11A and a normal progress transition pattern table 2 presenting a normal pattern shown in FIG. 11B. The normal progress transition pattern tables 1 and 2 store multiple data presenting normal transition patterns (simply the normal patterns, hereafter) of the transaction progress (namely, the transaction status). The data presenting the normal patterns are data associating sequence information presenting the status transition sequence and the status ID and transaction status information stored in the transaction status table shown in FIG. 10.

The transaction status presentation procedure of FIG. 9 that is executed using the data stored in the above tables will be described hereafter.

The seller terminal device 301 or buyer terminal device 302 sends to the progress presentation device 100 a request for transmission of a web page providing thread display of emails transmitted to the progress presentation device 100 and the transaction statuses included in the emails. Receiving the request by means of the LAN card 100f shown in FIG. 4, the progress presentation device 100 starts executing the transaction status presentation procedure shown in FIG. 9.

At the start of executing the transaction status presentation procedure, the acquisition part 120 shown in FIG. 6 receives from the device having sent the request (namely, the seller terminal device 301 or buyer terminal device 302) information identifying the user operating the device (namely, the seller ID or buyer ID) (Step S31).

Then, the searching part 160 searches the transaction table shown in FIG. 7 for one or multiple pieces of transaction information based on the seller ID or buyer ID acquired in the Step S31 (Step S32). In other words, the searching part 160 searches for the transaction ID and other transaction information associated with the seller ID if the seller ID is acquired in the Step S31, and the searching part 160 searches for the transaction ID and other transaction information associated with the buyer ID if the buyer ID is acquired in the Step S31.

Subsequently, the searching part 160 reads information presenting a given value stored in the information storage 110 in advance. Then, the searching part 160 searches the transaction history table shown in FIG. 8 for as many pieces of transaction status information and date and time information as the number of the given value presented by the read information (namely, a given quantity) in the reversed chronological order of the date and time presented by the date and time information for each of the one or multiple transaction IDs acquired in the Step S32 (Step S33). In this embodiment, the given quantity is three. However, this is not restrictive.

Subsequently, the searching part 160 reads the normal patterns from the normal progress transition pattern table 1 shown in FIG. 11A and the normal progress transition pattern table 2 shown in FIG. 11B (Step S34).

Then, the warning part 150 shown in FIG. 6 rearranges the transaction status information found in the Step S33 in the reversed chronological order of the date and time presented by the date and time information associated with the transaction status information on the basis of the transaction ID associated with the transaction status information. Subsequently, the warning part 150 determines whether the transaction status transition presented by multiple pieces of transaction status information rearranged on the basis of transaction ID matches the normal patterns read in the Step S34, and identifies any transaction status information that does not match any of the normal patterns (Step S35).

If any transaction status information that does not match any of the normal patterns is identified (Step S35; Yes), the warning part 150 executes the processing of Step S36.

In the Step S36, the warning part 150 generates a web page providing thread display of the transaction information found in the Step S32 and the transaction status information found in the Step S33. The warning part 150 highlights any one or more of the identified transaction status information (the identified transaction status information, hereafter) and the transaction ID associated with the identified transaction status information on the web page (Step S36).

On the other hand, if the warning part 150 identifies no transaction status information that does not match any of the normal patterns (Step S35; No), the processing of Step S37 is executed.

In the Step S37, the warning part 150, the presentation part 170 shown in FIG. 6 generates a web page providing thread display of the transaction information found in the Step S32 and the transaction status information found in the Step S33 without highlighting (Step S37).

After the Step S36 or Step S37, the warning part 150 or presentation part 170 outputs (namely, returns) the web page generated by them to the transmission source of the request (Step S38), and then ends the execution of the transaction status presentation procedure. Here, receiving the web page from the progress presentation device 100, the seller terminal device 301 or buyer terminal device 302 having sent the request displays the received web page.

The web page returned from the progress presentation device 100 will be described hereafter using a case in which the seller ID "S001" is acquired in the Step S31 shown in FIG. 9.

In the Step S32, the transaction table shown in FIG. 7 is searched for transaction IDs "T001," "T002," "T003," and "T004" associated with the seller ID "S002" and transaction information such as product name information associated with these IDs.

Then, in the Step S33, the status history table shown in FIG. 8 is searched for a given quantity (three pieces in this embodiment) of latest transaction status information and interval information associated with the transaction IDs "T001," "T002," "T003," and "T004."

Subsequently, in the Step S35, the transaction status "authorization failed (namely, payment failed)" presented by the transaction status information found based on the transaction ID "T003" is identified as being included in neither one of the normal pattern shown in FIG. 11A and normal pattern shown in FIG. 11B.

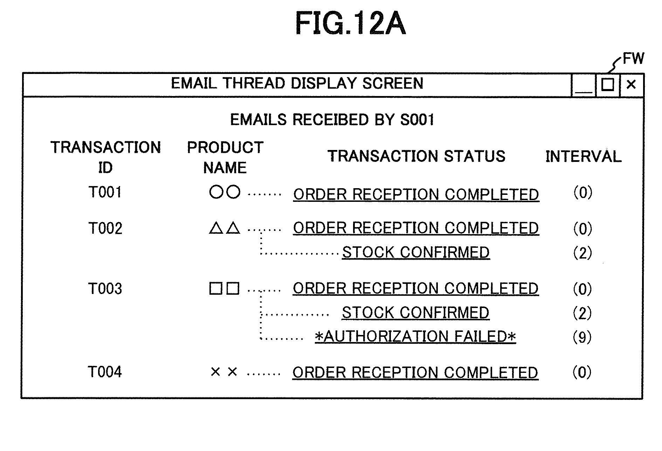

Therefore, in the Step S36, for example, a web page FW as shown in FIG. 12A is generated, which provides thread display of up to the given quantity of transaction status information and interval information found in the Step S33 in the ascending order of the time interval presented by the interval information on the basis of the transaction ID found in the Step S32. The web page FW highlights the transaction status "authorization failed" identified in the Step S35 by enclosing it with a symbol "*." Here, the transaction statuses displayed on the web page FW have a link to the URL (uniform resource locator) of a web page on which an email including the transaction status and transaction ID in its body text is posted.

### Embodiment 2

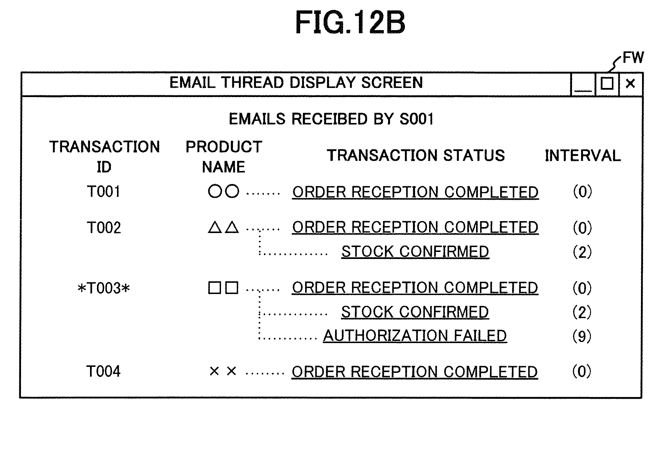

In Embodiment 1, the transaction status "authorization failed" identified in the Step S35 of FIG. 9 is enclosed with the symbol "*" for highlighting. On the other hand, in this embodiment, a web page FW as shown in FIG. 12B is generated in the Step S36 of FIG. 9, on which the transaction ID "T003" associated with the transaction status "authorization failed" identified in the Step S35 is enclosed with the symbol "*" for highlighting.

### Embodiment 3

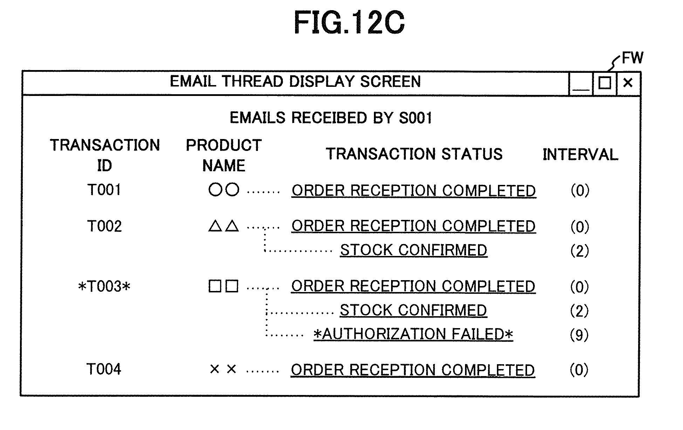

In Embodiment 1, the transaction status "authorization failed" identified in the Step S35 of FIG. 9 is enclosed with the symbol "*" for highlighting. On the other hand, in this embodiment, a web page FW as shown in FIG. 12C is generated in the Step S36 of FIG. 9, on which both the transaction status "authorization failed" identified in the Step S35 and the transaction ID "T003" associated with this transaction status are enclosed with the symbol "*" for highlighting.

Here, in Embodiments 1 to 3, the character string to be highlighted is enclosed with the symbol "*" for highlighting. This is not restrictive. An attribute of the character string to be highlighted can be differentiated from that of the other character strings for highlighting.

Examples of differentiating an attribute of the character string to be highlighted from that of the other character strings for highlighting include enclosing the character string to be highlighted with a symbol other than the symbol "*" and differentiating the font, color, or size of the character string to be highlighted from the font, color, or size of the other character strings. Other examples of differentiating an attribute of the character string to be highlighted from that of the other character strings for highlighting include italicizing the character string to be highlighted, underlining or adding dots for emphasizing to the character string to be highlighted, and using encircled characters for the character string to be highlighted.

### Embodiment 4

The web pages FW shown in FIGS. 12A to 12C and described in

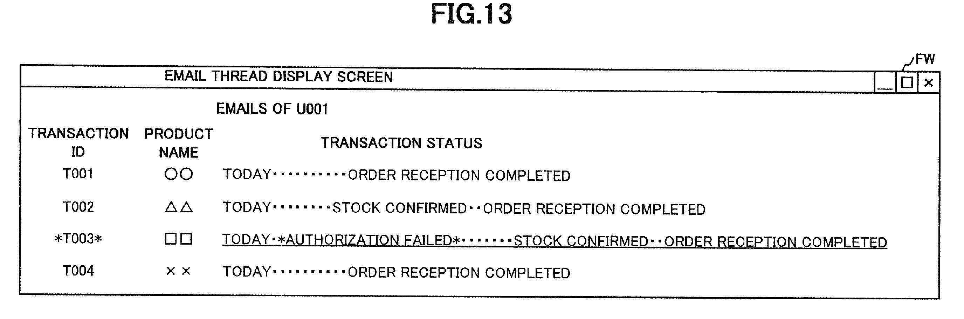

Embodiments 1 to 3, respectively, display the transaction status information presenting the progress of the transaction and the number presenting the number of days up to the current transaction status since the order for the product to be traded is placed. On the other hand, the web page described in this embodiment displays, as shown in FIG. 13, multiple pieces of transaction status information and the length of the time interval of multiple dates and times associated with the multiple pieces of transaction status information and indicated by the number of given characters or character strings. Furthermore, this web page FW displays multiple pieces of transaction status information rearranged in the reversed chronological order of the associated date and time.

More specifically, when the interval between the date and time associated with a transaction status "order reception completed" and the date and time associated with a transaction status "stock confirmed" is two days, the web page FW shown in FIG. 13 displays two of a symbol "·" between these two character strings. The display mode presenting the length of the time interval is not confined to the mode presenting the length of the time interval with the symbol "·" and can be a mode presenting the length of the time interval with the length of a bar chart. In other words, the length of the time interval can be presented as a physical distance in a planar space (in other words, the web page FW does not display the symbol "·" but does display a space instead of the symbol "·."). As described above, when a transaction status is changed to another transaction status, the distance between the position where the pre-change transaction status is displayed and the position where the post-change transaction status is displayed can be increased as it took more time to change the transaction status.

### Embodiment 5

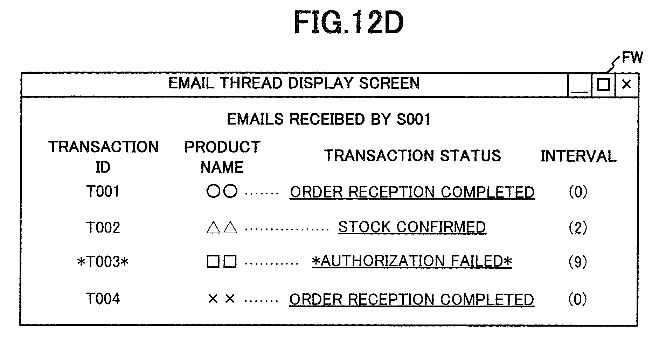

In Embodiment 1, the predetermined given quantity is three and the searching part 160 shown in FIG. 6 searches for three latest pieces of transaction status information and interval information. On the other hand, in this embodiment, the predetermined given quantity is one and the searching part 160 searches for one latest piece of transaction status information and interval information. The web page FW of this embodiment displays, as shown in FIG. 12D, the latest transaction status information and interval information found in the Step S33 of FIG. 9 on the basis of the transaction ID found in the Step S32.

### Embodiment 6

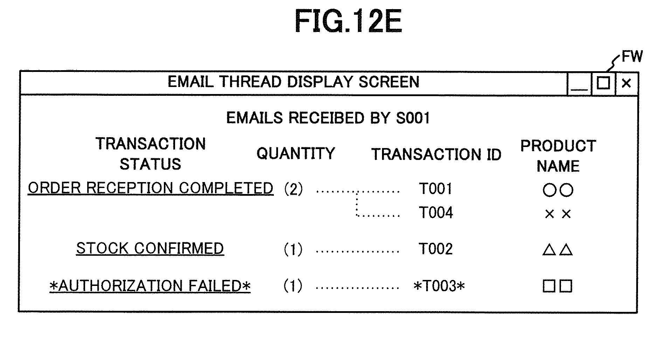

In Embodiment 1, the predetermined given quantity is three and the web page FW provides thread display of, for example as shown in FIG. 12A, up to three pieces of transaction status information and interval information on the basis of transaction ID. On the other hand, in this embodiment, the predetermined given quantity is one and the web page FW provides thread display of, as shown in FIG. 12E, the transaction IDs found in the Step S32 on the basis of the latest transaction status information found in the Step S33. Furthermore, the web page FW displays the number of transactions in the transaction status presented by the transaction status information on the basis of the latest transaction status information. Furthermore, the web page FW provides thread display of both the transaction ID and the number of transactions on the basis of the latest transaction status. The transaction IDs displayed on the web page FW have a link to the URL of a web page displaying an email including the transaction status and transaction ID in its body text.

### Embodiment 7

In Embodiment 1, the extraction part 130 shown in FIG. 6 designates information presenting the transmission date and time of an email extracted from the header part of the email as date and time information of the transaction ID and selected status information extracted from the email. On the other hand, in this embodiment, as the acquisition part 120 shown in FIG. 6 acquires an email, the extraction part 130 designates information presenting the system time/date supervised by the OS (operating system) as date and time information of the transaction ID and selected status information extracted from the email. In other words, the date and time presented by the date and time information can be the date and time when an email is transmitted or the date and time when an email is acquired by the progress presentation device 100.

### Embodiment 8

In Embodiment 8, in the Step S35 of FIG. 9, the warning part 150 shown in FIG. 6 identifies the transaction status information that is included in neither the normal pattern shown in FIG. 11A nor the normal pattern shown in FIG. 11B as transaction status information that matches neither one of the normal patterns (the unmatched transaction status information, hereafter). On the other hand, in this embodiment, the warning part 150 identifies all of multiple pieces of transaction status information "stock confirmed," "payment confirmed," and "shipped" as the unmatched transaction status information when those pieces of transaction status information "stock confirmed," "payment confirmed," and "shipped" occur in a transition order that matches neither one of the normal patterns such as "payment confirmed" → "shipped" → "stock confirmed" although they are included both in the normal pattern shown in FIG. 11A and in the normal pattern shown in FIG. 11B.

### Embodiment 9

In Embodiment 1, the seller terminal device 301 (and the buyer terminal device 302) sends an email to the progress presentation device 100 designated as the SMTP server. The progress presentation device 100 extracts an transaction ID and transaction status information from the body text of the email received from the seller terminal device 301 (or the buyer terminal device 302). Subsequently, the progress presentation device 100 forwards the email to the buyer terminal device 302 (or the seller terminal device 301) that is the destination. On the other hand, in this embodiment, for transmitting an email, the seller terminal device 301 (and the buyer terminal device 302) sends the email not only to the buyer terminal device 302 (and the seller terminal device 301) designated as the destination but also to the progress presentation device 100 designated as Cc (carbon copy) or Bcc (blind carbon copy). Receiving the email designated as the Cc or Bcc, the progress presentation device 100 extracts a transaction ID and transaction status information from the email but does not forward the email.

With the above configuration, the progress presentation device 100 acquires an email sent from a seller to a buyer, and presents the transaction status information or transaction ID extracted from the email on the basis of transaction identification information (namely, the transaction ID) or progress information (namely, the transaction status information) extracted from the acquired email. Then, the progress presentation device 100 can arrange and present the progress on the basis of transaction by presenting the transaction or transaction progress included in the email on the basis of transaction progress or transaction. Consequently, the seller and buyer can more easily check on the progress of a transaction compared with the prior art.

Furthermore, with the above configuration, the progress presentation device 100 warns to the seller when a transaction ID or transaction status information cannot be extracted from the body text of an email. Therefore, the progress presentation device 100 can warn the seller that of the transaction or transaction progress included in the email, there is a transaction or transaction progress that cannot be presented on the basis of transaction progress or transaction. Consequently, the incident of the buyer having difficulty in checking on the transaction progress is more prevented compared with the prior art.

Furthermore, with the above configuration, the progress presentation device 100 rearranges and presents the extracted transaction status information in the order of the acquisition date and time of emails, these are the extraction sources of the transaction status information, or in the order of the transmission date and time of the emails on the basis of the extracted transaction ID. Therefore, the progress presentation device 100 can present the transaction progress according to the transition sequence. Consequently, the seller and buyer can more easily check on whether any abnormal event has occurred to the transaction based on the transition sequence in the transaction progress.

Furthermore, with the above configuration, the progress presentation device 100 presents the interval between the acquisition dates and times or transmission dates and times of emails, these are the extraction sources of the arranged transaction status information, by means of information presenting the interval or as the mutual positional relationship of the displayed transaction status information. In this way, the progress presentation device 100 can present the time interval required for the transition in transaction progress on the basis of transaction. Consequently, the seller and buyer can more easily check on whether any abnormal event has occurred to the transaction based on the presented time interval.

Furthermore, with the above configuration, the progress presentation device 100 presents any one or more of the transaction and transaction progress in a highlighted manner when the transition in transaction progress does not match any of given progress transition patterns. Consequently, the seller and buyer can more easily check on whether the transition in the transaction progress is different from the given patterns compared with the prior art.

Furthermore, with the above configuration, the progress presentation device 100 presents up to a given quantity of latest progress information on the basis of transaction ID even if the number of statuses subject to transition in the progress of a transaction is increased. Consequently, the seller and buyer can more easily check on up to a given quantity of latest statuses compared with the prior art.

Furthermore, with the above configuration, the progress presentation device 100 forwards an acquired email to the destination specified in the email. Whatever destination is designated in an email, the email can be sent to the designated destination as long as it is sent to the progress presentation device 100.

Embodiments 1 to 9 can be combined with each other. The progress presentation device 100 comprising the configuration realizing the functions according to any of Embodiments 1 to 9 is provided, and besides a system configured by multiple devices and comprising the configuration realizing the functions of this embodiment can also be provided.

The progress presentation device 100 comprising the configuration realizing the functions according to any of Embodiments 1 to 9 in advance is provided, and besides an existing progress presentation device 100 can be made to function as the progress presentation device 100 according to any of Embodiments 1 to 9 by applying a program thereto. In other words, a progress presentation program for realizing the functional structures of the progress presentation device 100 exemplified by any of Embodiments 1 to 9 is applied in the manner that a computer (such as a CPU) controlling an existing progress presentation device can execute the program so that the existing progress presentation device can function as the progress presentation device 100 according to this embodiment.

Such a program can be distributed by any method. For example, such a program can be stored and distributed on a recording medium such as a memory card, CD-ROM, and DVD-ROM, or distributed via a communication medium such as the Internet. Furthermore, the progress presentation method according to the present invention can be implemented using the progress presentation device 100 according to the present invention.

Preferred embodiments of the present invention are described above. The present invention is not confined to these particular embodiments and various modifications and changes can be made within the scope of gist of the present invention set forth in the scope of claims.

This application is based on Japanese Patent Application No. 2011-122918, filed on May 31, 2011. The entire specification, scope of claims, and drawings of the Japanese Patent Application No. 2011-122918 are incorporated herein by reference.

### Description of Reference Numerals

- 10:: Communication network
- 100:: Progress presentation device
- 100a:: CPU
- 100b:: ROM
- 100c:: RAM
- 100d:: Hard disc
- 100e:: Media controller
- 100f:: LAN card
- 100g:: Video card
- 100h:: LCD
- 100i:: Keyboard
- 100j:: Speaker
- 100k:: Touch pad
- 110:: Information storage
- 120:: Acquisition part
- 130:: Extraction part
- 140:: Storing part
- 150:: Warning part
- 160:: Searching part
- 170:: Presentation part
- 200:: Web server
- 301:: Seller terminal device
- 302:: Buyer terminal device

## Claims

1. A progress presentation device, comprising:
an acquisition means for acquiring an email transmitted to a buyer from a seller executing a transaction on a product:
an extraction means for extracting identification information identifying the transaction and progress information presenting progress of the transaction from the acquired email; and
a presentation means for arranging and presenting to the buyer the extracted progress information on the basis of the extracted identification information.

2. The progress presentation device according to Claim 1, wherein:
the extraction means extracts the identification information and the progress information by cross-checking a body text of the acquired email with given character string cross-check patterns, and
a warning means for warning to the seller when the extraction means is not able to extract either the identification information or the progress information or neither the identification information nor the progress information.

3. The progress presentation device according to Claim 1 or 2, wherein:
the presentation means presents any one or more of the identification information and any progress corresponding to the identification information in a highlighted manner when a transition pattern of the progress information arranged in an order of acquisition date and time of emails, these are extraction sources, or in an order of transmission date and time of the emails on the basis of the extracted identification information does not match given progress transition patterns.

4. The progress presentation device according to any one of Claims 1 to 3, wherein:
the presentation means arranges and presents the extracted progress information in an order of acquisition date and time of emails, these are extraction sources of the progress information or in an order of transmission date and time of the emails on the basis of the extracted identification information.

5. The progress presentation device according to Claim 4, wherein:
the presentation means presents an interval of the acquisition dates and times or transmission dates and times of the arranged progress information by means of information presenting the interval or as a mutual positional relationship of the progress information.

6. The progress presentation device according to any one of Claims 1 to 3, wherein:
the presentation means identifies the latest progress information in the extracted progress information in an order of acquisition date and time of emails, these are extraction sources of the progress information or in an order of transmission date and time of the emails on the basis of the extracted identification information, and presents to the buyer either the identification information corresponding to the identified progress information or a quantity of the identification information on the basis of the identified progress information.

7. The progress presentation device according to any one of Claims 1 to 3, wherein:
the presentation means presents a given quantity of latest progress information in the extracted progress information in an order of acquisition date and time of emails, these are extraction sources of the progress information or in an order of transmission date and time of the emails on the basis of the extracted identification information.

8. The progress presentation device according to any one of Claims 1 to 7, wherein:
the acquisition means forwards the acquired email to a destination specified in the email.

9. A progress presentation program allowing a computer to function as:
an acquisition means for acquiring an email transmitted to a buyer from a seller executing a transaction on a product:
an extraction means for extracting identification information identifying the transaction and progress information presenting the progress of the transaction from the acquired email; and
a presentation means for arranging and presenting to the buyer the extracted progress information on the basis of the extracted identification information.

10. A computer-readable recording medium on which a progress presentation program is recorded, the progress presentation program allowing a computer to function as:
an acquisition means for acquiring an email transmitted to a buyer from a seller executing a transaction on a product:
an extraction means for extracting identification information identifying the transaction and progress information presenting progress of the transaction from the acquired email; and
a presentation means for arranging and presenting to the buyer the extracted progress information on the basis of the extracted identification information.

11. A progress presentation method executed by a progress presentation device comprising an acquisition means, an extraction means, and a presentation means, including:
an acquisition step in which the acquisition means acquires an email transmitted to a buyer from a seller executing a transaction on a product:
an extraction step in which the extraction means extracts identification information identifying the transaction and progress information presenting progress of the transaction from the acquired email; and
a presentation step in which the presentation means arranges and presents to the buyer the extracted progress information on the basis of the extracted identification information.
